# EUROPEAN PATENT APPLICATION

(11) **EP 1 635 142 A2**
(43) Date of publication of application: **15.03.2006**
(21) Application number: 05019464.6
(22) Date of filing: 07.09.2005
(51) Int. Cl.: G01C 21/36

(54) **Navigation apparatus**

(30) Priority: 08.09.2004 JP 2004261401; 08.09.2004 JP 2004261402
(71) Applicant: AISIN AW CO., LTD., Anjo-shi, Aichi 444-1192 (JP)
(72) Inventor: Tomita, Hiroshi, Okazaki-shi, Aichi 444-8564 (JP); Minami, Toshiaki, Okazaki-shi, Aichi 444-8564 (JP); Yoshikawa, Kazutaka, Okazaki-shi, Aichi 444-8564 (JP); Nagase, Kenji, Okazaki-shi, Aichi 444-8564 (JP)
(74) Representative: Kramer - Barske - Schmidtchen

(57) **Abstract**

A navigation apparatus outputs facility information needed by a user in a simple and easy-to-understand manner and includes a change processing unit. The change processing unit searches, responsive to a signal from a facility display change icon on a facility information display screen, facility information limited to those facilities that are in the direction of travel ahead of the current position, selected from among facility information stored in a facility information storage unit. Additional facilities within the output facilities are searched for within additional facility information stored in an additional facility information storage unit. Then all types of facility icons are displayed on a facility display change screen, but only facilities in the direction of travel from the current position are selectable. All types of additional facility icons are displayed on the facility display change screen but, again, only additional facilities in the direction of travel from the current position are selectable. Then, when the user selects facilities or facilities including the desired additional facilities, the three facilities nearest the current position are displayed on the guidance screen.

## Description

### INCORPORATION BY REFERENCE

The disclosures of Japanese Patent Applications No. 2004-261401 filed on September 8, 2004, and No. 2004-261402 filed on September 8, 2004 including the specifications, drawings and abstracts thereof are incorporated herein by reference in their entirety.

### BACKGROUND OF THE INVENTION

### 1. Field of the Invention

The present invention relates to a navigation apparatus.

### 2. Description of the Related Art

Conventional navigation apparatus, such as, for example, described in Japanese Unexamined Patent Application Publication No. H8-304085, provide guidance along a route to a destination. For example, a vehicle navigation apparatus installed in a vehicle may search for a route from a current location to a destination responsive to input of the destination. The navigation apparatus may provide guidance by voice and/or visual display.

When the user travels on a route that can not be changed except at a preset point, for example, an Interchange/Exit on an expressway, the aforementioned conventional navigation apparatus locates a facility selected by the user situated ahead of the current position and, optionally, a predetermined number of facilities following the selected facility for display along with their names. In addition, one of the display facilities is selected as a detailed data display facility, so that additional facilities within that one facility may be displayed.

However, in the conventional navigation apparatus described above, the facility selected by the user or the predetermined number of facilities following the selected facility are selected for display along with their names. However, when the user wants to check one facility on a display screen, the user must repeat the selection procedure until the desired facility is displayed, which repetition is troublesome. Additional facilities only for the one selected facility are displayed. Accordingly, when the user wants to check the additional facilities within a facility, the user must select the facilities one by one.

### SUMMARY OF THE INVENTION

Accordingly, one objective of the present invention is to provide a more convenient output of facilities to a user of a navigation apparatus.

To solve the problems described above, the present invention provides a navigation apparatus for outputting a display of facility information for facilities, e.g. service areas, exits, etc., where various service facilities, comfort facilities, shops, etc. ("additional facilities") are located therein, as well as a road display. The navigation apparatus of the present includes facility information storage means for storing facility information; additional facility information storage means for storing additional facility information for additional facilities (e.g., specific service facilities) within the facilities (e.g., service areas), potential additional facility output means for outputting selectable additional facilities, from among those stored in the additional facility information storage means, as potential additional facilities on an additional facility selection screen; selection means for selecting at least one of the potential additional facilities on the additional facility selection screen; and output means for outputting a (facility output screen) display of facility information for target facilities, the target facilities being a predetermined number of facilities nearest the current position and selected from among facilities selected by the selection means, along with simultaneous display of a road map. Preferably, the additional facility selection display and the road map (guidance) display are simultaneously presented on the same screen, either as a split screen or as a main display and a window within the main display.

Thus, as used herein, the term "facilities" has reference to service areas, roadside facilities, areas at exits, etc. and the term "additional facilities" has reference to the various specific service facilities, comfort facilities, shops, etc. located within or near such facilities.

The additional facility output means may also have a capability for searching for facilities (e.g. service areas), in the direction of travel from the current position, which facilities include arbitrary additional facilities (e.g. service, comfort or shopping facilities), responsive to input of a search signal.

In another embodiment, the navigation apparatus of the present invention includes facility information storage means for storing facility information for the facilities, e.g. service areas; potential facility output means for outputting selectable facilities stored in the facility information storage means as a display of potential facilities (facility selection screen); selection means for selecting at least one of the displayed potential facilities; and output means for outputting a display of facility information (facility output screen) for a predetermined number of the facilities nearest the current position from among all facilities in the direction of travel from the current position and for outputting, responsive to selection of potential facilities including a predetermined number of the nearest facilities set as target facilities, an output screen with simultaneous display of the facility information for the target facilities as well as a road map display. Preferably, the additional facility selection display and the road map (guidance) display are simultaneously presented on the same screen, either as a split screen or as a main display and a window within the main display.

In another embodiment, the navigation apparatus of the present invention outputs facility information for facilities along roads as well as a display of roads (map), and comprises: facility information storage means for storing facility information for the facilities; potential facility output means for searching within the facility information storage means, responsive to a command signal to search for arbitrary facilities, to locate facilities in the direction of travel from the current position and outputting the thus located facilities as "selectable facilities" or "potential facilities" on a facility selection screen; selection means for selecting at least one of the potential facilities on the facility selection screen; and output means for outputting a facility output screen with display of facility information for the output target facilities, the output target facilities representing a predetermined number of facilities nearest the current location, from among the potential facilities selected by the select means, and for outputting a road display.

The output means outputs additional facility information for the potential additional facilities selected by the select means and facility information for the output target facilities.

The navigation apparatus may further include route search means for searching for a guidance route from a current position to a destination, wherein the potential additional facility output means searches, responsive to a search command signal, for additional facilities located in or near facilities which are located along the roads included in the guidance route, i.e. searching within the additional facility information storage means and outputting "selectable additional facilities" as potential additional facilities on the additional facility select screen.

The navigation apparatus of the invention may further include potential facility output means for searching, responsive to input of a search signal commanding a search for arbitrary facilities, the facility information storage means for facilities along the roads included in the guidance route and outputting the selectable facilities as potential facilities on the facility selection screen.

In another embodiment, the navigation apparatus of the present invention outputs a display of additional facility information for additional facilities located on a section or sections of the route ahead between facilities, as well as a display of roads, through an output unit. This embodiment includes facility information storage means for storing facility information for facilities correlated with various roads; additional facility information storage means for storing additional facility information for additional facilities easily accessible from a section or sections of the guidance route between the facilities; potential additional facility output means for, responsive to input of a search signal requesting a search for arbitrary additional facilities, searching the additional facility information storage means for additional facilities on the section or sections of the route ahead of the current position in the direction of travel and for outputting selectable additional facilities as potential additional facilities on the additional facility selection screen;
selection means for selecting at least one of the potential additional facilities on the additional facility select screen; and output means for outputting an additional facility output screen with display of facility information for facilities located on (easily assessable from) a predetermined number of the sections nearest the current position selected from among sections with the potential additional facilities selected by the select means.

The navigation apparatus of the present invention may also include route search means for searching for a guidance route from the current position to the destination, wherein the potential additional facility output means also has a search capability and, responsive to a search signal commanding a search for arbitrary additional facilities, searches the additional information storage means for additional facilities in sections in the direction of travel from the current position along the roads included in the guidance route, and outputs the selectable additional facilities as potential additional facilities on the additional facility selection screen. Each section includes the area surrounding the road between the facilities, and the additional facility information storage means stores additional facility information for additional facilities in the section.

### BRIEF DESCRIPTION OF THE DRAWINGS

Fig. 1 is a block diagram of a navigation apparatus according to a first embodiment of the present invention.

Fig. 2 shows a guidance screen with input for requesting display of facility display change screen according to the first embodiment.

Fig. 3 shows a facility display change screen according to the first embodiment.

Fig. 4 shows a guidance screen after a facility display change (from that of Fig. 2) according to the first embodiment.

Fig. 5 shows a guidance screen after another facility display change according to the first embodiment.

Fig. 6 is a flowchart of a navigation routine according to the first embodiment.

Fig. 7 is a flowchart of facility display change routine according to the first embodiment.

Fig. 8 shows a guidance screen with input for requesting display of a facility display change screen according to a second embodiment.

Fig. 9 shows a facility display change screen according to the second embodiment.

Fig. 10 shows a guidance screen after a facility display change according to the second embodiment.

Fig. 11 is a flowchart of a facility display change routine according to the second embodiment.

Fig. 12 illustrates a navigation system with access to an information center.

Fig. 13 is a block diagram of a navigation apparatus according to a third embodiment.

Fig. 14 shows a guidance screen with input for requesting a congestion information display according to the third embodiment.

Fig. 15 shows a guidance screen with a congestion information display according to the third embodiment.

Fig. 16 is a flowchart of a navigation routine according to the third embodiment.

Fig. 17 is a flowchart of a routine for generating a congestion information display according to the third embodiment.

Fig. 18 shows a guidance screen with input for requesting a congestion information display according to a fourth embodiment.

Fig. 19 shows a guidance screen with a congestion information display according to the fourth embodiment.

### DESCRIPTION OF THE PREFERRED EMBODIMENTS

### First Embodiment

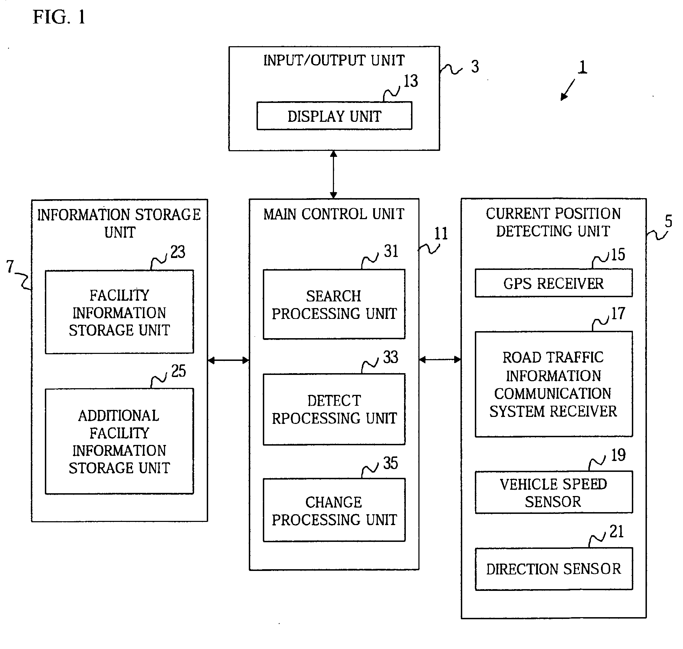

A first embodiment will now be described with reference to Figs. 1 to 7. As shown in Fig. 1, the navigation apparatus 1 includes an input/output unit 3, a current position detection unit 5, an information storage unit 7, and a main control unit 11. Each of the input/output unit 3, the current position detection unit 5, and the information storage unit 7 are connected for electrical communication with the main control unit 11, so that data may be transferred among the units.

The input/output unit 3, for example, includes an input means, such as a remote controller with various operation icons, for input of various operation signals to the main control unit 11 for execution of route guidance. The input/output unit 3 also includes a display unit 13 which may be, for example, a LCD with a touch panel for display of images and the results of various calculations by the main control unit 11. In addition, when a predetermined position on the screen is touched by, for example, a finger, the display unit 13 detects the touched position and outputs an operational signal corresponding to the touched position to the main control unit 11 for execution of route guidance. Thus, the display unit 13 may function as an output means as well as an input means.

The current position detection unit 5 detects the current position of the vehicle and may include a GPS receiver (Global Positioning System) 15, a road traffic information communication system receiver 17, a vehicle speed sensor 19, and a direction sensor 21. The current position detection unit 5 outputs data received by the GPS receiver 15 and the road traffic information communication system receiver 17 and/or sensor data, detected by the vehicle speed sensor 19 and the direction sensor 21, to the main control unit 11. Note that, in the present embodiment, the current position detection unit 5 detects coordinates of the current position while the navigation apparatus 1 executes the route guidance.

The information storage unit 7 is a database stored in a storage means such as a hard disk, a DVD-ROM, etc., which storage means also stores various kinds of programs and data for route searching, route guidance, map display, and route guidance display on the display unit 13. The information storage unit 7 further stores destination data and map data used for setting the destination by the main control unit 11 and road data used for the route searching.

The information storage unit 7 further includes a facility (main facility) information storage unit 23 for storing facility information and an additional facility (subsidiary facility) information storage unit 25 for storing additional facility information. The main facility information may include, for example, names, types, position data, and icons for Interchanges/Exits, Service areas, Parking areas, and junctions on tollways such as expressways. Such information is stored in correlation with roads and by outbound lane/inbound lane. The additional (subsidiary) facility information may include, for example, names, types, and icons for, for example, a restaurant, a gas station, a rest room, an ATM, and/or a facsimile (FAX) service within the facilities, e.g. within a service area. Such additional facilities are stored in correlation with the various main facilities. Note that, in the present embodiment, the facility information and the additional facility information may be stored in advance in the information storage unit 7, along with the map data.

The main control unit 11 includes a search unit 31, a route determination unit 33, and a change execution unit 35. In the first embodiment, the main control unit 11 executes a route guidance program and a program for change of the facility display, which programs are stored in the information storage unit 7. Accordingly, the main control unit 11 may function as a potential additional facility output means, a potential facility output means, a select means, and an output means.

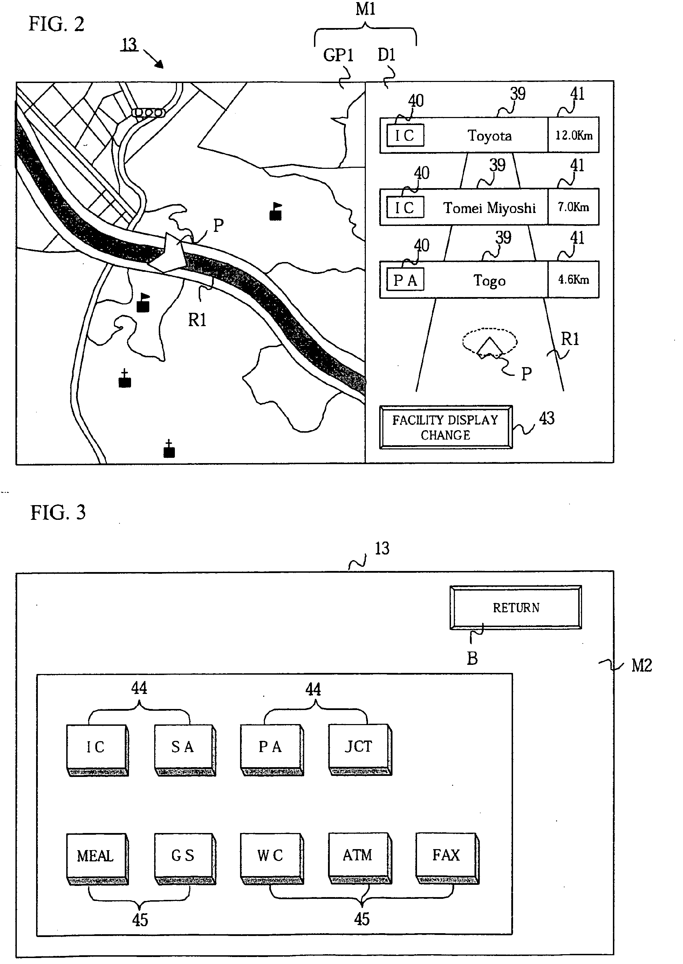

The search unit 31 calculates coordinates of the vehicle current position on the basis of data received from the current position detection unit 5 and searches the map data stored in the information storage unit 7 for the vehicle current position (hereinafter referred to as "current position") corresponding to the calculated coordinates. The search unit 31 further searches the map data for a registered destination. The search unit 31 generates image data corresponding to the map data for the vicinity around the current position and/or the destination. The search unit 31 then outputs image data corresponding to the map data of the vicinity around the vehicle current position to the input/output unit 3 and displays the image on the display unit 13. In the first embodiment, for example, an arrow indicator P indicating the current position may be displayed on the guidance screen M1 as shown in Fig. 2.

The route determination unit 33, serving as a route search means, searches for a route between any two points, that is, a guidance route, automatically or by the user's instruction. If a search command signal is input from the input/output unit 3 requesting a search for a guidance route, the route determination unit 33 searches for a guidance route R1 from a starting point to a destination and generates data for display of the guidance route R1 on the guidance map GP1, e.g. the guidance screen M1 shown in Fig. 2.

In the present embodiment, the guidance screen M1 is divided to simultaneously show two pictures on a split screen, that is, the guidance display GP1 for providing route guidance and a facility information display D1. On the left side of the guidance screen M1 is the guidance display GP1 and on the right side of the guidance screen M1 is the facility information display D1.

As shown in Fig. 2, the facility information display D1 includes the indicator P indicating the current position, the guidance route R1, names 39 of three facilities, located along roads included in the guidance route R1 and which are the three facilities nearest the current position in the direction of travel, and the three facility type names 40. Further, each distance 41 from the current position to the displayed three named facilities 39 is also displayed on the facility information display D1. On the facility information display D1 of Fig. 2, the three facilities nearest the current position are "Togo Parking Area", "Tomei Miyoshi Interchange", and "Toyota Interchange", in that order.

A facility display change icon 43 is displayed on the facility information display picture D1 which, when pressed by a user, starts the execution of the facility display change routine by the change processing unit 35.

More specifically, the change processing unit 35 displays on guidance screen M1 only facilities desired by the user or only facilities with additional facilities (specific shops and/or services) desired by the user (the facility information display D1), responsive to the user's instruction. When the user pushes the facility display change icon 43 on the facility information display D1 (a command or input generating a search signal), the change processing unit 35 searches for facilities in the direction of travel from the current position among all facilities stored in the facility information storage unit 23. The change processing unit 35 further searches the additional facility information for additional facilities within the main facilities previously identified by search. The change processing unit 35 then displays facility icons 44 on the facility display change screen M2 (Fig. 3), i.e. as an additional facility selection screen and as a facility select screen, and in which only icons corresponding to the facilities in the direction of travel from the current position are displayed for selection. The change processing unit 35 then further displays different additional facility icons 45 on the facility display change screen M2 in which only icons corresponding to the additional facilities in the direction of travel from the current position are displayed for selection.

As shown in Fig. 3, the facility display change screen M2 is a screen for selection of facilities and additional facilities by the user. The facility icons 44 corresponding to the facilities prestored in the facility information storage unit 23 are displayed on the upper side of the facility display change screen M2. The additional facility icons 45 corresponding to the additional facilities prestored in the additional facility information storage unit 25 are displayed on the lower side of the facility display change screen M2. The facility icons 44 in Fig. 3 are, from left to right, Interchange (IC), Service Area (SA), Parking Area (PA), and Junction (JCT). The additional facility icons 45 in Fig. 3 are, from left to right, Food, Gas Station (GS), Rest Room (WC), ATM, and Facsimile (FAX).

When all of the facilities prestored in the facility information storage unit 23 are in the direction of travel from the current position, any of the facility icons 44 displayed on the upper side may be selected by, for example, pressing by a finger of the user. However, if some of the facilities prestored in the facility information storage unit 23 are not in the direction of travel from the current position, the facility icons 44 corresponding to the non-existing facilities are displayed on the facility display change screen M2 but cannot be selected. For example, when all facilities except a junction exist in the direction of travel from the current position, the facility icon 44 representing junction is displayed but can not be selected. In the first embodiment, selectable facilities among the displayed facilities on the facility display change screen M2 are termed "potential facilities."

Like the case of facilities as described above, when all of the additional facilities (subunits) prestored in the additional facility information storage unit 25 are located ahead of the current position in the direction of travel, all of the additional facility icons 45 displayed in the lower side are selectable by, for example, touching with the finger of the user. If some of the additional facilities prestored in the additional facility information storage unit 25 are not located ahead in the direction of travel from the current position, the additional facility icons 45 corresponding to those additional facilities are displayed on the facility display change screen M2 but cannot be selected. In this latter case, selectable additional facilities, also represented by display of additional facility icons on the facility display change screen M2 as potential additional facilities.

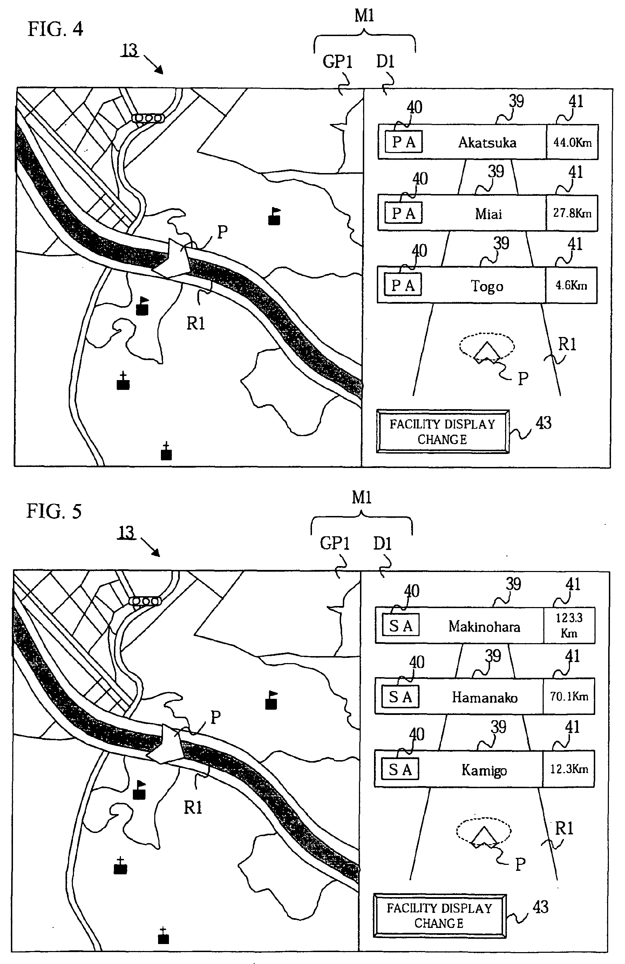

When the facility icon 44 or the additional facility icon 45 is pressed by the finger of the user, the main control unit 11 receives a signal, representing the facility corresponding to the pressed facility icon 44 or the additional facility corresponding to the pressed additional facility icon 45. The main control unit 11 reads out, responsive to pressing the facility icon 44, a predetermined number of facilities closest to the current position, e.g. the three nearest facilities, for display as target facilities. Subsequently, when the user presses return button B on the facility display change screen M2, the display screen is changed to the guidance screen M1 as described in Fig. 5. In the facility information display D1 (the facility output screen), the facility names 39 (the type names 40 and the distances 41 as well) are displayed for only the target facilities. Fig. 4, illustrates selection of the Parking Area facility icon 44 on the facility information display screen D1. In this case, the three parking areas nearest the current position are "Togo", "Miai", and "Akatsuka," in that order.

When the additional facility icon 45 is touched (selected), the main control unit 11 reads out the nearest three facilities which include additional facilities and that correspond to the selected additional facility icon 45. Subsequently, when the user presses the return button B on the facility display change screen M2, the facility names 39 of the target facilities, the type names 40, and the distances 41 from the current position to the target facilities are displayed on the guidance screen M1.

For example in Fig. 3, it is assumed that the user pressed the "Gas Station (GS)" icon to select gas stations from among the additional facility icons 45 corresponding to other types of additional facilities on the facility display change screen M2. In this case, when the user presses the return icon B on the facility display change screen M2, the three facilities nearest the current position, e.g. service areas including gas stations, are read out as target facilities. Then the facility names 39, the type names 40, and the distances 41 from the current position to the target facilities are displayed.

Fig. 5 shows the facility information display screen D1 displayed responsive to selection of the additional facility icon 45 "Gas Station". In this case, the three service areas nearest the current position including gas stations, "Kamigo", "Hamanako", and "Makinohara" are displayed in that order. Thus, even if a plurality of service areas, rest stops etc. are located nearer the current position than those service areas with gas stations, those closer areas are not displayed because they do not have any gas station. In addition, the distances from the current position to the three service areas are displayed. In this case, 12.3km to Kamigo SA, 70.1km to Hamanako SA, and 123.3km to Makinohara SA are displayed. Accordingly, the user may easily know the distances from the current position to each displayed target facility. For example, according to the distances 41, it may be determined which facility should be used from among those facilities with the desired additional facility.

Note that, in the present embodiment, even when the user selects type names of additional facilities, the type names are not displayed on the guidance screen M 1. As shown in Fig. 5, only the facility type name 40 and the icon "SA", are displayed. The additional facility type name Gas Station is not displayed. However, when one type of additional facility is made selectable by the user, from among potential additional facilities, the facility name 39 including the selected type of additional facility is displayed on the guidance screen M1 so that the user may intuitively know which facility should be selected as an additional facility.

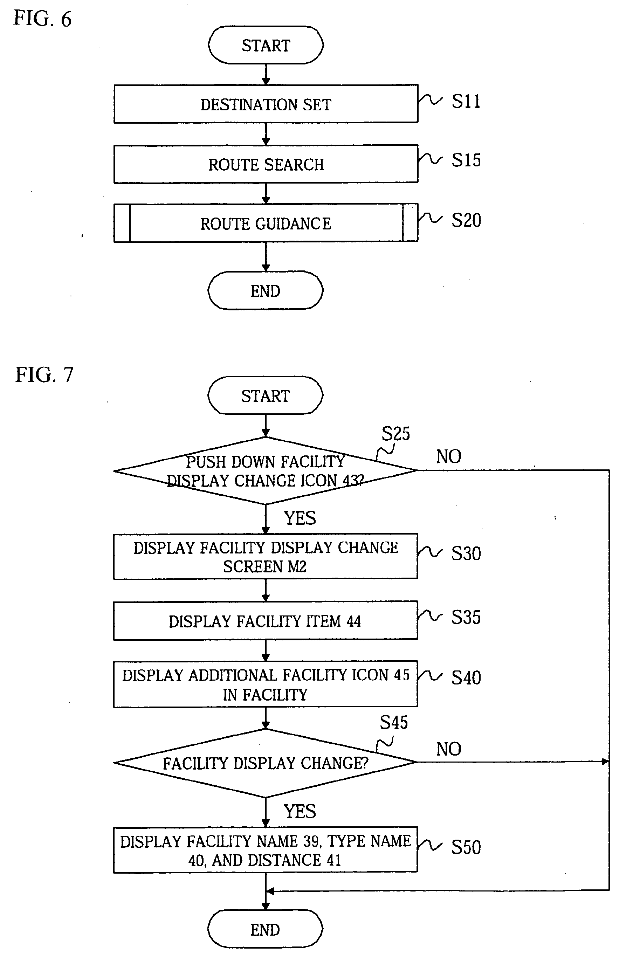

Next, the operation of the navigation apparatus 1 will be described with reference to Fig. 6 which is a flowchart of the entire navigation routine (including, for example, route searching and route guidance). First, the user inputs an address of the destination to the main control unit 11 (the route determination unit 33), utilizing the input/output unit 3, and the destination is thereby set (Step S11). The route determination unit 33 then searches for the destination from map information stored in the information storage unit 7. Based on the map information and road information, a route from the starting point to the destination is determined (Step S15). In the present embodiment, for example, the route determination unit 33 searches for a plurality of guidance routes and then calculates the required times for travel to the destination for each guidance route, based on traffic information for each link of a guidance route. The search unit 31 then selects one route, for which the calculated travel time is the shortest, as a guidance route R1, from among the plurality of guidance routes located by the route determination unit. In the present embodiment, the selected guidance route R1 includes an expressway and is displayed on the guidance screen M1 of the display unit 13 as described in Fig. 2.

When the route guidance has been started (Step S20), Steps 25 through 50 in Fig. 7 are executed (hereinafter referred to as "facility display change processing"). First, the main control unit 11 determines whether the facility display change icon 43 displayed on the guidance screen M1 of the display unit 13 is pressed by the user (Step S25). When the main control unit 11 determines that the facility display change icon 43 is not pressed by the user (Step S25=NO), the main control unit 11 terminates the facility display change processing and continues the route guidance without changing the facility display (Step S20). Conversely, when the main control unit 11 determines that the facility display change icon 43 has been pressed by the user (Step S25=YES), the main control unit 11 displays the facility display change screen M2 on the display unit 13, instead of the guidance screen M1 (Step S30).

The main control unit 11 searches for facility information stored in the facility information storage unit 23 and displays facility icons 44 indicating types of facilities, which are in the direction of travel ahead of the current position, and additional facility icons 45 indicating available (selectable) additional facility types, located at, near or within the facilities (Step S35, Step S40).

The main control unit 11 next determines whether the displayed facilities should be changed (Step S45). That is, it is determined whether the user has pressed (selected) the facility icon 44 or the additional facility icon 45 on the facility display change screen M2. When the user has not pressed (selected) either the facility icon 44 or the additional facility icon 45, but has pressed the return icon B (Step S45=NO), the main control unit 11 terminates the facility display change routine and continues the route guidance (Step S20). Meanwhile, when the user has pressed (selected) the facility icon 44 or the additional facility icon 45 and then pressed the return icon B (Step S45=YES), the main control unit 11 determines that the user wants to change the display. Then the facility corresponding to the selected facility icon 44 is set as the display target facility or the additional facility corresponding to the selected additional facility icon 45 is set as the display target additional facility. Then the facility name 39, the type name 40, and the distance 41 corresponding to the display target facility are displayed on the guidance screen M1 of the display unit 13 (Step S50).

The main control unit 11 repeats the facility display change routine (Step S25 through Step S50), in accordance with the user's instructions until the user arrives at the destination. When the user finally arrives at the destination, the route guidance is terminated (Step S20).

The first embodiment described above offers the user advantages:
1) According to the present embodiment, when the user selects facilities on the facility display change screen M2 or when the user selects additional facilities within the facilities, during travel on a road such as an expressway on which there are facilities with additional facilities, the facility names 39, the type names 40, and the distances 41 for only the three facilities nearest the current position are displayed as display target facilities on the guidance screen M1. Accordingly, the user may check for information on necessary facilities from a limited number of choices, in an easy to understand manner.

2) According to the first embodiment, a desired facility may be displayed by a simple operation such as, for example, a push of the facility display change icon 43, the facility icon 44, the additional facility icon 45, or the return icon B. Thus, the user may access only necessary information in an easy to understand manner.

3) According to the first embodiment, a desired facility for the user may be displayed on a single screen, thus eliminating need for troublesome operations such as scrolling. Thus, the user need view only necessary information in an easy to understand manner.

4) According to the first embodiment, the user may easily learn the distance to a desired facility and/or the distance to a facility including a desired additional facility because the distances 41 from the current position to display target facilities are displayed on the facility information display D1. Thus, for example, the user may select a desired facility from among the displayed target facilities and the displayed target facilities including the desired additional facilities, based on the distances 41.

5) According to the present embodiment, facilities necessary for the user may be displayed together with the guidance display GP1 on the same, single screen. This means that the route guidance is not interrupted. Thus, even during route guidance, the user is presented with only necessary information in an easy to understand manner.

### Second Embodiment

Next, the second embodiment will be described with reference to Fig. 6 and Figs. 8 to 11. In the present embodiment, the change processing unit 35 described in the first embodiment displays additional facilities associated with two facilities on a road. Accordingly, the same reference numerals are used for identical features and a detailed description thereof is not repeated here.

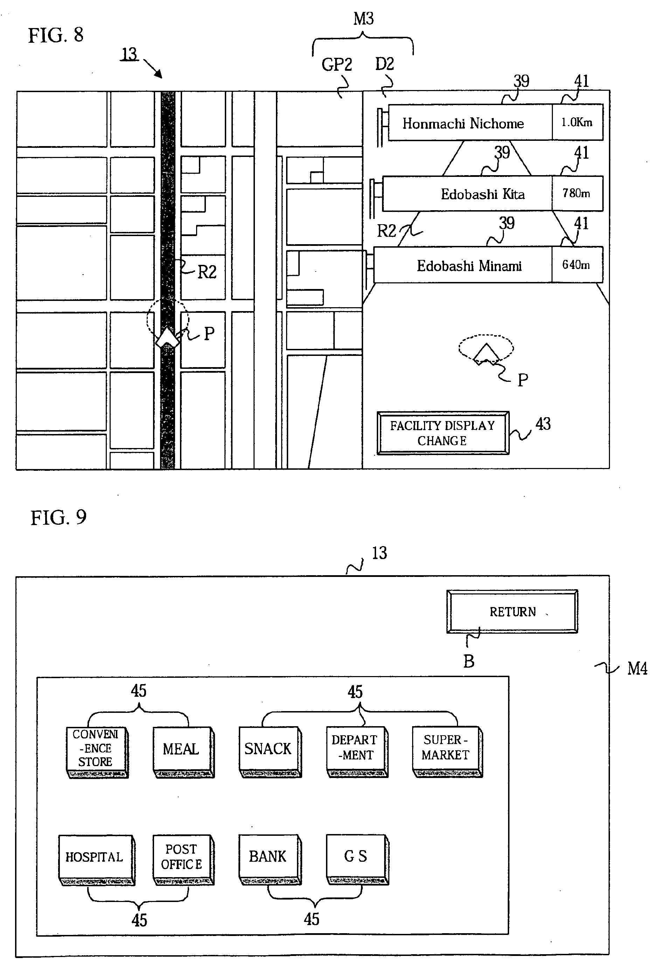

As shown in Fig. 8, it is assumed that the user is traveling on a guidance route R2, that includes only general roads searched by the route determination unit 33, and that is displayed as the guidance display GP2 on the guidance screen M3 of the display unit 13. In this case, facility information stored in the facility information storage unit 23 may include various types of information, for example, intersections on general roads, bridges, tunnels, public facilities along general roads, facility names for, for example, stadiums etc., position data, and icons. The facility information is stored by road and by lane. In addition, additional facility information may include various types of information, for example, additional facility names, position data, and icons for, for example, convenience stores, hospitals, or post offices located between the two facilities (hereinafter referred to as a section). The additional facility information is stored by road, lane, and section.

Like the first embodiment, the guidance screen M3 in Fig. 8 is a split screen presenting two pictures side-by-side, i.e. the guidance display GP2 for route guidance and the facility information display D2 for displaying facility information. On the left side of the guidance screen M3, the guidance display (picture) GP2 is a display of map data, the current position, and the guidance route R2. On the right side of the guidance screen M3, the facility information display D2 is a display of the facility names (intersection names) 39 and the distances 41 from the current position to the facilities (intersections). Before executing the facility display change routine, the indicator P indicating the current position, the guidance route R2, and the two consecutive sections (between consecutive facilities) ahead of and nearest the current position in the direction of travel are shown in the facility information display D2, as shown in Fig. 8. Three facility names (intersection names) 39 are displayed as facilities on the two consecutive sections. In this example of Fig. 8, "Edobashi minami". "Edobashi kita", and "Motomati nichome" are shown as the facility names 39 on the facility information display D2. The facility information display D2, also shows distances 41 from the current position to those three facilities. As in the case of the first embodiment, the facility display change icon 43 is displayed on the facility information display (picture ) D2. When the user presses the facility display change icon 43, the change processing unit 35 starts the facility display change routine.

More specifically, the change processing unit 35 displays a desired additional facility in accordance with the user's instruction. When the user presses the facility display change icon 43 on the guidance screen M3 (Fig. 8), the change processing unit 35 searches for additional facilities in the direction of travel from the current position among the additional facilities stored in the additional facility information storage unit 25. Then all additional facility types are displayed on the facility display change screen M4 as the additional facility selection screen, as shown in Fig. 9. Only additional facilities in the direction of travel from the current position are selectable on screen.

The facility display change screen M4 is a screen for selection of a desired additional facility by the user. In the facility display change screen, the additional facility icons 45 corresponding to the additional facilities stored in advance in the additional facility information storage unit 25 are displayed. If all the additional facilities prestored in the additional facility information storage unit 25 are in the direction of travel, the additional facility icons 45 displayed on the facility display change screen M4 are all selectable by, for example, a push of the finger of the user.

On the other hand, if some of the additional facilities stored in the additional facility information storage unit 25 are not in the direction of travel ahead of the current position, the additional facility icons 45 corresponding to the non-existing additional facilities displayed on the facility display change screen M4 are not unselectable. For example, if ahead in the direction of travel there is no hospital, the displayed additional facility icon 45 "Hospital" is not selectable. In the present embodiment, only those additional facilities among the additional facilities displayed on the facility display change screen M4 which are selectable are potential additional facilities.

When an additional facility icon 45 is selected by, for example, pressing with the finger of the user, an operation signal, which indicates that the additional facility corresponding to the pressed additional facility icon 45 is selected, is output to the main control unit 11. When the additional facility icon 45 is pressed, the main control unit 11 searches for the additional facility corresponding to the selected additional facility icon 45. In the present embodiment, the user may select a plurality of the additional facility icons 45, that is, the user may select a plurality of additional facility types. Subsequently, if the user presses the return button B on the facility display change screen M4, the two road sections including the additional facilities nearest the current position, as located by the search, (the number "two" is an example of "a predetermined number" as used in the claims) are displayed. The additional facilities in the displayed sections are set as target additional facilities. In the case of a selection of three additional facilities, if the three additional facilities are located in three different sections, the three sections are set as display sections. In other words, it is possible for the user to check the display sections and the additional facility icons 45 for the additional facilities in the display sections at once (on a single screen) without scrolling the guidance screen M3.

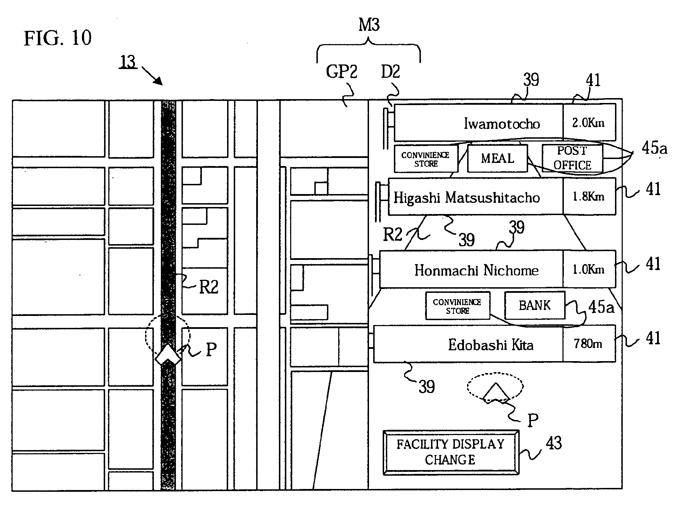

In Fig. 10, the facility names 39 in the display sections, the distances 41 from the current position to the facilities, and the additional facility indicators 45a for the display target additional facilities in the display sections are shown on the facility information display D2 (additional facility output screen) on the guidance screen M3. In the present embodiment, only two display sections are displayed on the guidance screen M3. If the two display sections are sequential, the end point of the first display section overlaps with the starting point of the second display section as shown in Fig. 8. As a result, three items of facility information (the facility names 39) are displayed. If the two display sections are not sequential, there is no facility overlap between the two display sections and, thus, four items of facility information (the facility names 39) are displayed.

For example, assume that the user has pressed, to select from among the additional facility icons 45, "Convenience store", "Meal", "Post office", and "Bank" and then presses the return button B on the facility display change screen M4, the two display sections which include the additional facilities corresponding to the selected additional facility icons 45 and which are nearest ahead of the current position, facilities in the display sections, and the additional facility indicators 45a for the target additional facilities are displayed on the guidance careen M3. In this case, the additional facility indicators 45a for "Convenience store" and "Bank" are displayed in the display section between the Edobashi-kita intersection and the Honmachinicyome intersection. The additional facility indicators 45a for "Convenience store," "Meal," and "Post office" are displayed in the display section between the Higashimatusitacyo intersection and the Iwamotocho intersection.

As shown in Fig. 8, a section without the selected additional facility, such as the section between Edobashiminami intersection and Edobashikita intersection, is not displayed even if such section is close to the current position. As shown in Fig. 10, facility information (facility names 39) for the facilities in the displayed sections with the selected additional facilities, i.e. Edobashikita intersection, Honmachinicyome intersection, Higashimatsushitacho intersection, and lwamotocho intersection, are displayed as well as the additional facility indicators 45a for the additional facilities within the display sections. Thus, only that information necessary for the user is displayed and in a simple manner.

Further the distances from the current position to each facility are displayed, i.e. 780m to Edobashikita intersection, 1.0km to Honmachinichome intersection, 1.8km to Higashimatsushitacho intersection, and 2.0km to lwamotocho intersection. Thus, the user may easily understand the distance from the current position to each facility and know the distance from the current position to each displayed target additional facility.

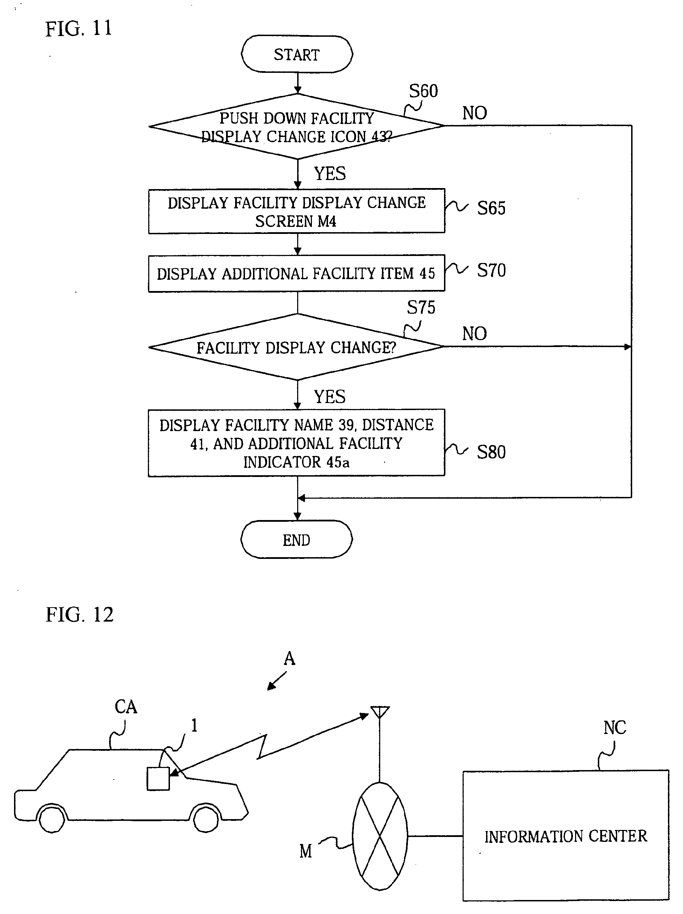

Next, the operation of the navigation apparatus 1 will be described. In the present embodiment, it is assumed that the navigation apparatus 1 has set a destination and searched for a route (step S11 and step S15 in Fig. 6) in advance. For example, the route determination unit 33 searches for a plurality of guidance routes and calculates required times to the destination along each of the routes based on traffic information for each link composing the route. Then the route determination unit 33 selects the one guidance route with the shortest time, from among the plurality of guidance routes, as the guidance route R2. Note that in the present embodiment, the selected guidance route R2 includes only general roads and is displayed on the display unit 13 as the guidance display GP2, as shown in Fig. 8. Then the route guidance is started (step S20 in Fig. 6) and the facility display change routine is executed (steps S60 to step S80 in Fig. 11).

The main control unit 11 determines whether the user has pressed the facility display change icon 43 on the guidance screen M3 (Step S60). When the main control unit 11 determines that the user has not pressed the facility display change icon 43 (Step S60=NO), the main control unit11 terminates the facility display change routine and continues route guidance without changing the facility display (Step S20 in Fig. 6). When the main control unit 11 determines that the user has pressed the facility display change icon 43 (Step S60=YES), the main control unit 11 displays the facility display change screen M4, instead of the guidance screen M3, on the display unit 13 (Step S65). Then the main control unit 11 (the change processing unit 35) searches for additional facility information and displays selectable additional facility icons 45 indicating additional facilities ahead in the direction of travel from the current position on the facility display change screen M4 (Step S70).

The main control unit 11 determines whether the facility display should be changed (Step S75). That is, the main control unit 11 determines whether the user pressed any additional facility icon 45 on the facility display change screen M4. If the user has not selected any additional facility icon 45 but, rather, has pressed the return icon B (Step S75=NO), the main control unit 11 terminates the facility display change routine and continues route guidance (Step S20). If it is determined that the user pressed both the additional facility icon 45 and the return icon B (Step S75=YES), the main control unit 11 determines that the user wants to change the facility display. Thus, the additional facility indicator 45a of the selected additional facilities, the names 39 of facilities in the displayed sections, and the distances 41 from the current position to the facilities are displayed on the guidance screen M3 (Step S80).

The main control unit 11 then repeats the facility display change routine as described above until the user arrives at the destination (Steps S60 through S80), in accordance with the user's instruction. The route guidance is finally terminated when the user arrives at the destination (Step S20).

The second embodiment, as described above, offers the user the following advantages:
1) In traveling along a road section including an additional facility and located between two facilities, the additional facilities selected on the facility display change screen M4 by the user, are searched for among additional facilities on sections in the direction of travel ahead of the current position. Then the two sections nearest current position which have the selected additional facilities are set as display sections. The additional facilities on the display sections are set as target additional facilities. The facility names 39 of the display sections, the distances 41 from the current position to the facilities, and the additional facility indicators 45a corresponding to the target additional facilities are displayed on the guidance screen M3. Thus, only information necessary for the guidance to the additional facilities is displayed in a simple and easy-to-understand manner.

2) A plurality of additional facilities may be selected on the guidance screen M3 and the plurality of additional facilities selected by the user may be displayed in an easy-to-understand manner.

3) The user may easily determine the distance from the current position to a desired (selected) additional facility because the distances 41 from the current position to each facility on the display sections are given on the facility information display D2. For example, according to the distances 41, the user may determine which facility with the desired additional facility should be selected.

The embodiments described above may be modified as follows:
In the first embodiment, the route determination unit 33 searches for a guidance route
R1 including an expressway. The user selects additional facilities provided in facilities which are located along the expressway included in the guidance route R1. However, during traveling along the expressway, the user may select additional facilities located along the expressway without repeating a search for a guidance route. In this case, the destination is not set. Thus, the search range for facilities and additional facilities is from the current position to the end of the expressway.

In the first embodiment, an indicator (facility type name) indicating an additional facility is not displayed on the guidance screen M1 after completion of the facility display change. However, the indicator (facility type name) indicating the additional facility may be displayed together with the facility name 39. Thus, it is possible to easily determine which facility (facility name 39) includes which additional facility by viewing the guidance screen M 1.

In the first embodiment, the names 39 of the three facilities nearest the current position are displayed on the guidance screen M1. However, more than three facility names 39 may be displayed. Further, scroll bars may be provided for the guidance screens M1 and M3 so that the guidance screens M1 and M3 may be scrolled by use of the scroll bars. For example, when scrolling down the guidance screens M1 and M3 in the direction of travel, it is possible to display facilities including additional facilities selected by the user or facilities selected by the user followed by the facilities which have been already displayed on the guidance screens M1 and M3 in the direction of travel may be displayed in this order. Therefore, the user may check the facilities which have the additional facilities selected by the user or other facilities having the additional facilities selected by the user.

In the first embodiment, only one type of additional facility is selectable from among potential additional facilities. However, more than one type of additional facility may be selected. In this case, an indicator (facility type name) corresponding to an additional facility selected by the user may be displayed on the guidance screen M1, so that the user may intuitively know which type of additional facility is in each facility displayed.

In the first embodiment, if some of the facilities stored in advance in the facility information storage unit 23 are not located in the direction of travel ahead of the current position, the facility icons 44 corresponding to such facilities are not selectable on the facility display change screen M2. However, alternatively, for those facilities prestored in the facility information storage unit 23 which are not located in the direction of travel ahead of the current position, the facility icons 44 corresponding to such facilities are not displayed on the facility display change screen M2.

In the first embodiment, the facility display change screen M2 is displayed instead of the guidance screen M1 and desired facilities and desired additional facilities are displayed on the facility display change screen M2. However, the display screen need not be switched. The facility display change screen M2 may be displayed in a part of the guidance screen M1 (window).

In the second embodiment, the route determination unit 33 searches for a guidance route R2 including a given road and the user selects additional facilities in sections of the guidance route R2. However, during travel along that road, the user may select additional facilities along the guidance route without repeating a route search. In this case, the range of search for additional facilities is from the current position to the end of travel on that (given) road, without sacrifice of any of the advantages of embodiment.

In the second embodiment, the facility names 39 are displayed as facility information on the guidance screen M3. However, the facility type names may be displayed as well as the facility names.

In the second embodiment, a general road is divided into sections between facilities. Then additional facilities along the sections are set as potential additional facilities. For example, an area, which is up to 100m in width from both sides of the road, including the road itself, may be set as a section. Such a section corresponds to a "surrounding area" as used herein. In this case, additional facilities in the section may be set as potential additional facilities. Therefore, the accessible, actual additional facilities may be displayed. For example, in the case of expressways, the user can change to another road only at a limited number of facilities (Interchange/exit, etc.) after starting travel. But in the case of a general road (non-limited access), the user may change traveling to another road with relative ease. Thus, not only additional facilities along the currently-traveled road but also additional facilities in the area surrounding the currently-traveled road may be useful for the user. If the additional facilities close to the general road are included in the potential additional facilities as well, the range of choice of additional facility information is expanded for the user.

In the second embodiment, the facility display change screen M4 is displayed instead of the guidance screen M3, and desired additional facilities are selected on the facility display change screen M4. However, the facility display change screen M4 may be displayed in a part of the guidance screen M3 without switching the display screen.

In the first and second embodiments, if some of the facilities stored in advance in the additional facility information storage unit 25 are not in the direction of travel ahead of the current position, these additional facilities are displayed on the facility display change screens M2 and M4 but are not selectable. However, if some of the facilities stored in advance in the additional facility information storage unit 25 are not in the direction of travel from the current position, the additional facility icons 45 for those additional facilities need not be displayed on the facility display change screens M2 and M4.

In the first and second embodiments, operation of navigation apparatus 1 is described. However, the navigation apparatus 1 may be used in conjunction with a navigation system. For example, as shown in Figs. 12, the navigation apparatus 1 may communicate with an information center NC via a network M such as a mobile telephone network. Thus, the navigation system A may be composed of the navigation apparatus 1 and the information center NC. The navigation apparatus 1 of the navigation system A is registered as a user in the information center NC in advance and the navigation apparatus 1 is managed by the assigned user ID.

In the above case, the facility information storage unit 23 and the additional facility information storage unit 25 corresponding to the user ID are not in the navigation apparatus 1 but, rather, in the information center NC. During execution of the facility display change routine, the navigation apparatus 1 transfers the user ID and guidance routes to the information center NC via the network M. The information center NC sends potential facility information and potential additional facility information for the guidance route to the navigation apparatus 1. In such an embodiment, the navigation apparatus 1 would not include either the facility information storage unit 23 or the additional facility information storage unit 25 so that the navigation apparatus 1 may be made smaller. Further, the change processing unit 35 need not be incorporated into the navigation apparatus 1 but, rather, into the information center NC, along with the facility information storage unit 23 and the additional facility information storage unit 25 corresponding to the user ID. During execution of the facility display change routine, if the navigation apparatus 1 transfers the user ID and guidance routes to the information center NC via the network M, the information center NC transmits potential facilities and potential additional facilities located along the guidance routes to the navigation apparatus 1. If the user selects a displayed target facility or a displayed target additional facility from among the potential facilities and the potential additional facilities, the information center NC transfers information for the selected target facility or target additional facility to the navigation apparatus 1. In this manner, the navigation apparatus 1 does not need to search in the facility information storage unit 23 or the additional facility information storage unit 25 during the facility display change routine, so that it is possible to reduce the processing load on the navigation apparatus 1. Thus, it is possible to display additional facilities selected by the user in a simple and easy-to-understand manner using a simplified and smaller navigation apparatus.

In the first and second embodiments, the distances 41 from the current position to the facilities are displayed on the facility information display D1. However, instead of the distances, predicted travel times from the current position to the facilities or predicted arrival times at the facilities may be displayed. Thus, the user can easily learn the required times from the current position to the facilities. The predicted travel times and the predicted arrival times may be calculated by well known calculation methods, using traffic information received from the road traffic information communication system or traffic information received from the information center. Further, the traffic information (predicted travel times) received from the road traffic information communication system or traffic information (predicted travel times) received from the information center may be displayed as received.

In the first and second embodiments, the navigation apparatus 1 searches for a plurality of guidance routes and then calculates required times to the destination for each guidance route based on traffic information for each link in the guidance routes. The navigation apparatus 1 next selects the one guidance route with the shortest required travel time from among the guidance routes. However, the navigation apparatus 1 may conduct a more limited search to determine only a single suitable guidance route. That is, the navigation apparatus 1 may calculate guidance route costs (evaluations for the guidance routes) from the starting point (the current position) to each node based on the link traffic information and/or link connection information such as traffic restrictions. When the all costs to the destination are calculated, the navigation apparatus 1 may determine one suitable guidance route by connecting links having the smallest guidance route costs.

Third and Fourth Embodiments

Conventional navigation apparatus provides guidance along a route to a destination. For example, a vehicle navigation apparatus installed in a vehicle may search for a route from the current location to the destination once the destination is set. The navigation apparatus may further provide guidance along the route by voice and/or picture. Accordingly, the convenience to the user is improved and the range of use is enlarged.

When the user travels on a road that can not be exited at any point except preset points, for example, Interchanges/Exits on an expressway, the aforementioned conventional navigation apparatus sets, as displayed facilities, a facility selected by the user and a predetermined number of facilities following the selected facility, taken from among all facilities that are located on the guidance route in the direction of travel from a current position. The navigation apparatus also displays the facility names (for example described in Japanese Unexamined Patent Application Publication No. H8-304085). In addition, traffic congestion information between facilities is displayed as well as the facility names.

However, in the conventional navigation apparatuses described above, the facility selected by the user or the predetermined number of facilities following the selected facility are all displayed as target facilities, along with the facility names. When congestion information is displayed, all sections are displayed regardless of whether or not they have congestion. Thus, when the user wants to check sections with congestion situated in the direction of travel from the current position on a display screen, the user needs to repeat selection of displayed facilities until the congestion is found, which operation is troublesome for the user.

Accordingly, an object of the third and fourth embodiments is to provide a more convenient output of traffic information to a user of a navigation apparatus.

To solve the problems described above, the present embodiments provide a navigation apparatus for outputting traffic information for facilities along roads, along with simultaneous display of a road map, the navigation apparatus comprising: facility information storage means for storing facility information for facilities correlated with the road from which they are easily accessible; traffic information storage means for storing traffic information; section search means for searching for a road section with traffic volume greater than a predetermined value, from among road sections between facilities in the direction of travel from the current position; and output means for outputting traffic information for an output section, the output section including a predetermined number of sections nearest the current position, and facility information for the output section, along with display of a road map.

The traffic information storage means may store traffic information correlated with sections which are areas between facilities.

The present embodiments may further include outputting traffic information for facilities along roads as well as the roads, comprising: traffic information search means for searching for traffic information for sections between facilities in the direction of travel from the current position.

In the present embodiments, the road may be a general (non-limited access) road and the facility may be an intersection. Each section further includes the vicinity (area) on both sides of the general road, between the facilities. The traffic information storage means stores traffic information for the sections.

Alternatively, in the present embodiments, the road may be an expressway and the facility at least one of Service areas, Parking areas, Interchanges, and Junctions.

The present embodiments may further comprise route search means for searching for guidance routes from the current position to a destination, wherein the output means outputs traffic information for an output section, the output section representing a section on a guidance route, and facility information for facilities on the output section, along with display of the guidance route.

The present embodiments, if the traffic volume or degree of congestion is greater than the predetermined value, utilize a difference indicator generating means for generating a difference indicator to highlight and output the section, wherein the output means outputs the difference indicator and facility information for facilities in the output section as well as a display of the roads. The navigation apparatus changes the difference indicator by the difference between the traffic volume and the predetermined value. In the present embodiments, the navigation apparatus further comprises input means for inputting traffic information output signals to the output means, wherein the output means outputs, responsive to receipt of a traffic information output signal, the traffic information for the output section and the facility information for facilities in the output section, as well as a map display.

### Third Embodiment

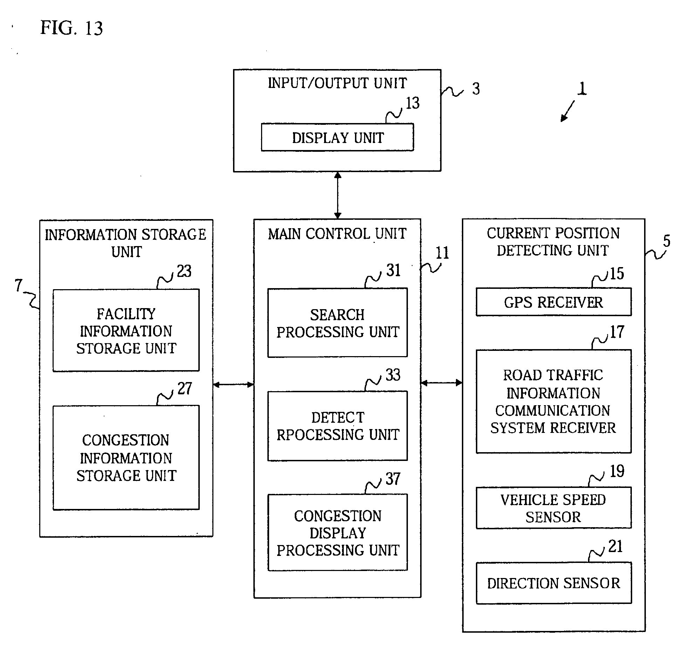

The third embodiment will be described with reference in Figs. 13 through 17. As shown in Fig. 13, the navigation apparatus 1 includes the input/output unit 3, the current position detection unit 5, the information storage unit 7, and the main control unit 11. Each of the input/output unit 3, the current position detection unit 5, and the information storage unit 7 are in communication with the main control unit 11 so that various types of data may be transferred among the units.

The input/output unit 3, for example, includes an input means such as a remote controller with various operation icons. The input/output unit 3 inputs various kinds of operation signals to the main control unit 11 for execution of route guidance. In addition, the input/output unit 3 includes display unit 13 which may be, for example, a LCD with a touch panel for displaying images and various results of calculations by the main control unit 11. In addition, when a predetermined position on the screen is touched by, for example, a finger, the display unit 13 detects the touched position and outputs an operation signal corresponding to the touched position to the main control unit 11 for execution of route guidance. The display unit 13 may function as an output means as well as an input means.

The current position detection unit 5 detects the current position of a vehicle and includes a GPS receiver (Global Positioning System) 15, a road traffic information communication system receiver 17, a vehicle speed sensor 19, and a direction sensor 21. The current position detection unit 5 outputs various items of data received by the GPS receiver 15 and the road traffic information communication system receiver 17 and/or data detected by the vehicle speed sensor 19 and the direction sensor 21 to the main control unit 11. Note that, in the present embodiment, the current position detection unit 5 detects coordinates of the current position while the navigation apparatus 1 executes the route guidance.

The information storage unit 7 is a database including a storage means such as a hard disk, a DVD-ROM, etc. and stores various programs and data for route searching, route guidance, map display, and route guidance display on the display unit 13. The information storage unit 7 further stores destination data and map data used for setting a destination by the main control unit 11 and road data used for route searching.

The information storage unit 7 further includes a facility information storage unit 23 for storing facility information. The facility information in the present embodiment may include, for example, names, types, position data, and icons for Interchanges/Exits, Service areas, Parking areas, and junctions on tollways such as expressways. Such information is stored correlated with road and outbound lane/inbound lane. Note that, in the present embodiment, the facility information is stored in advance, as is the map data.

The information storage unit 7 further includes a congestion information storage unit 27 as a traffic information storage means for storing congestion information. The road traffic information communication system receiver 17 receives traffic information from the road traffic information communication system at any given time. The congestion information may include, for example, degrees of congestion, lengths of congestion, and travel times for a plurality of links connecting the facilities (hereinafter referred to as "section") abstracted from the received traffic information for each link on a predetermined range of the road. The congestion information is stored by section and travel direction (outbound/inbound lane). Every time new traffic information is transferred from the road traffic information communication system, the congestion information is updated.

The degree of congestion is one of predetermined levels of congestion. Different types of degrees of congestion are given for expressways, urban expressways, and general roads. For example, for expressways, "Congested" means a vehicle speed equal to or less than 40km/h, "Not Congested" means a vehicle speed equal to or greater than 61 km/h, and "Crowded" represents anything between "Congested" and "Not Congested". For urban expressways, "Congested" means a vehicle speed equal to or less than 20km/h, "Not Congested" means a vehicle speed equal to or greater than 41 km/h, and "Crowded" means anything between "Congested" and "Not Congested". According to general roads, "Congested" for when the vehicle speed is equal to or less than 10km/h, "Not Congested" means the vehicle speed is equal to or greater than 21 km/h, and "Crowded" means anything between "Congested" and "Not Congested".

The main control unit 11 includes a search processing unit 31, a route determination unit 33, and a congestion display processing unit 37. In the present embodiment, the main control unit 11 executes a route guidance program stored in the information storage unit 7 and a program for displaying congestion information. Accordingly, the main control unit 11 may function as a section search means, a traffic information search means, a difference indicator generating means, and an output means.

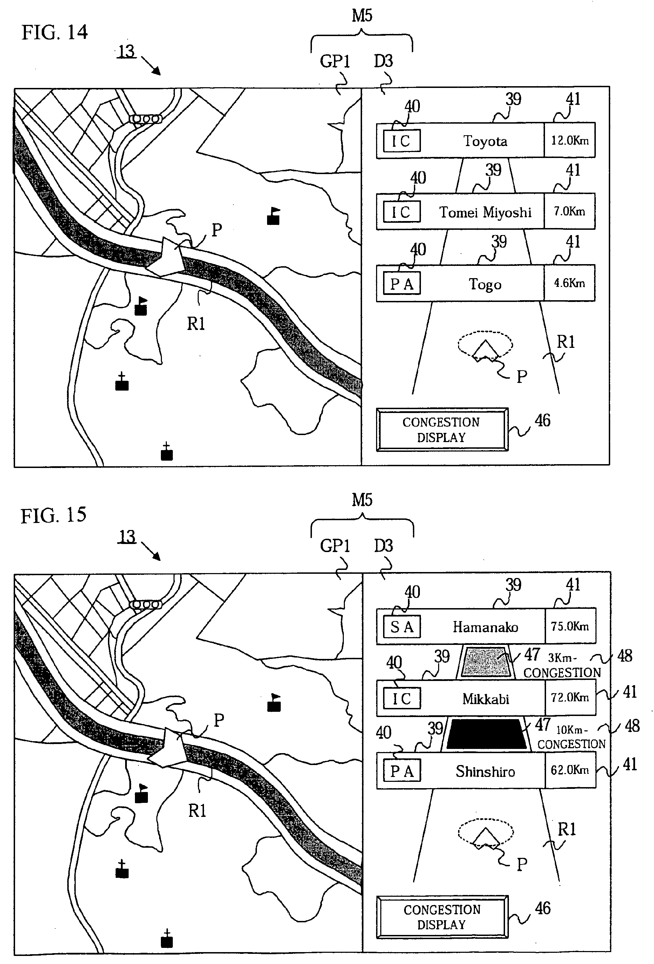

The search processing unit 31 calculates coordinates of the vehicle current position based on data received from the current position detection unit 5. The search processing unit 31 makes an inquiry into map data stored in the information storage unit 7 and searches for the vehicle current position (hereinafter referred to as "current position") corresponding to the calculated coordinates in the map data. The search processing unit 31 further makes an inquiry into the map data to find a registered destination and searches for the position in the map data. The search processing unit 31 generates image data corresponding to the map data for the vicinity of the current position and/or the map data for the vicinity around the destination. The search processing unit 31 then outputs the image data corresponding to the current position to the input/output unit 3 and displays the image on the display unit 13. In the present embodiment, for example, the arrow indicator P indicating the current position may be displayed at the position corresponding to the coordinates of the current position on the display 13 as shown in guidance screen M5 in Fig. 14.

The route determination unit 33 searches for a route between any two points as a guidance route, automatically or in accordance with the user's instruction. If a search operation signal from the input/output unit 3 is input to command a search for a guidance route, the route determination unit 33 searches for a guidance route R1 from a starting point to a destination and generates various items of information for displaying the guidance route R1. As shown in Fig. 14, the guidance route R1 is displayed on the guidance map of the guidance picture GP1 in the guidance screen M5 by the route determination unit 33.

In the present embodiment, the guidance screen M5 is split to show two pictures (displays), that is, the guidance picture GP1 for guidance along the route and a congestion information display picture D3 for displaying congestion information. On the left side of the guidance screen M5, the guidance picture GP1 is displayed and on the right side of the guidance screen M5, the congestion information display picture D3 is displayed.

As shown in Fig. 14, before congestion information display change processing, the indicator P indicating the current position, the guidance route R1, three facility names 39 for facilities located along roads included in the guidance route R1 and which are the three facilities nearest the current position in the direction of travel, and the three facility type names 40 are shown on the congestion information display D3. Further, each distance 41 from the current position to the displayed three facilities is also displayed on the congestion information display picture D3. On the congestion information display picture D3 in Fig. 14, the three facilities nearest the current position are "Togo Parking Area", "Tomei Miyoshi Interchange", and "Toyota Interchange," in that order.

A selectable congestion display icon 46 is displayed in the congestion information display picture D3 only when there is a section which is situated in the direction of travel from the current position and whose degree of congestion is "Congested" or "Crowded". When the user presses the congestion display icon 46, the congestion display processing unit 37 executes the congestion information display routine.

More specifically, the congestion display processing unit 37 selectively displays those sections which have degrees of congestion classified as "Congested" or "Crowded," taken from among all sections in the direction of travel from the current position, on the guidance screen M5 (the congestion information display D3) responsive to the user's instruction. The congestion display processing unit 37 searches for sections whose degree of congestion are classified as "Congested" or "Crowded," which sections are described herein as "sections whose traffic volume is greater than a predetermined value," which search is repeated among all sections in the direction of travel from the current position every time the road traffic information communication system receiving unit 17 receives traffic information and stores congestion information abstracted form the traffic information in the congestion information storage unit 27. The nearest two sections ("a predetermined number") in the direction of travel from the current position are set as display sections, i.e. those sections among the searched sections with congestion classified as "Congested" or "Crowded". The congestion information for the display sections becomes "target congestion information." For example, if three sections with congestion classified as "Congested" or "Crowded" exist in the direction of travel from the current position, the three sections are set as the display sections.

When the congestion display icon 46 is pressed to generate a traffic information output signal, the facility names 39, the facility type names 40, the distances 41 from the current position to facilities in the display sections, and the target congestion information are displayed on the congestion information display D3 of the guidance screen M5. In the present embodiment, a degree of congestion indicator 47 and a length of congestion indicator 48 are displayed as target congestion information. The congestion degree indicator 47 as the difference indicator has the same shape but is slightly smaller than the guidance route R1 for each section displayed in the congestion information display picture D3. The congestion degree indicator 47 changes color according to the degree of congestion (according to the differences) in each display section. For example, as shown in Fig. 15, if the degree of congestion is "Congested", a red indicator is displayed. If the degree of congestion is "Crowded", an orange indicator is displayed. The congestion length indicator 48 is displayed as characters with the degree of congestion and the length of congestion. For example, as shown in Fig. 15, if a "Congested" area stretches for 10 km, the message "10km-congested" is displayed. If a "Crowded" area stretches for 3 km, the message "3km-crowded" is displayed.

Note that, in the present embodiment, only two sections are displayed on the guidance screen M5. However as shown in Fig. 15, when the two display sections are contiguous, a facility at the end of the first display section and a facility at the start of the second display section overlap each other. Thus, three facility names 39 as (facility information) are displayed. However, if the two display sections are not contiguous, there is no facility overlap at the point of connection of the display sections. Thus, four facility names 39 (facility information) are displayed.

Fig. 15 shows the congestion information display picture D3 after execution of the congestion information display routine. In this manner, in the guidance screen M5, the display sections in the direction of travel from the current position, the display target congestion information, and facilities in the display sections are displayed. For example, for the section between "Shinshiro Parking Area" and "Mikkabi Interchange", the red congestion degree indicator 47 and the congestion length indicator 48 "10km-Congested" are displayed. For the section between "Mikkabi Interchange" and "Hamanako Service Area", the orange congestion degree indicator 47 and the congestion length indicator 48 "3km-Crowded" are displayed.

In Fig. 14, the section between "Togo Parking Area" and "Shinshiro Parking Area" is not displayed although it is near the current position because the degree of congestion for the section is "Not congested". Instead, facility information (the facility names 39 and the facility type names 40) for the facilities in the display sections which have a degree of congestion classified as "Congested" or "Crowded" and the target congestion information (the congestion degree indicators 47 and the congestion length indicators 48) are displayed. In this example, information for "Shinshiro Parking Area", "Mikkabi Interchange", and "Hamanako Service Area" are displayed. Thus, the user need check only necessary information in a simple manner.

In addition, each distance, for example, 62km from the current position to Shinshiro Parking Area, 72km from the current position to Mikkabi Interchange, and 75km from the current position to Hamanako Service Area are displayed. Thus, the user can easily learn the distance from the current position to each congested area.

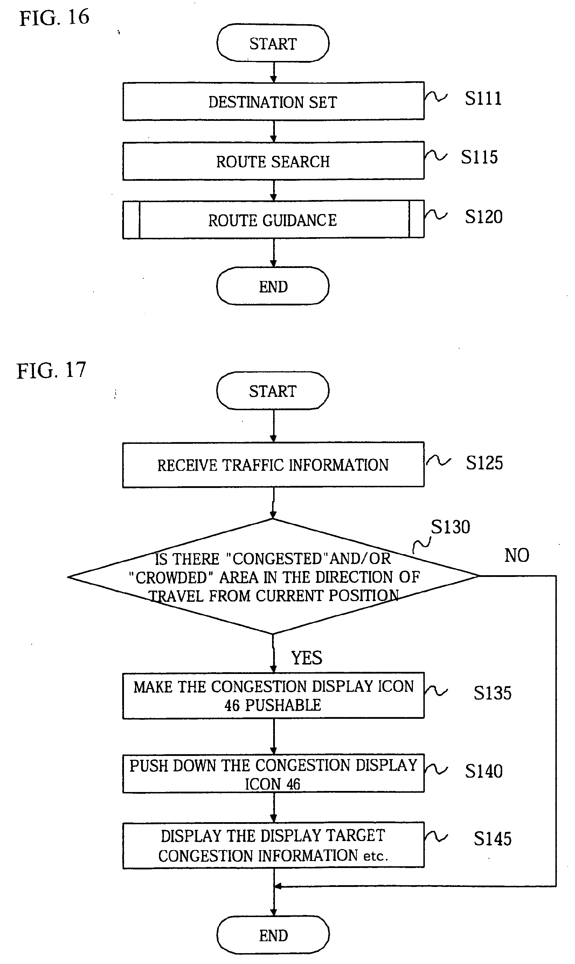

Next, operation of the navigation apparatus 1 will be described. Fig. 16 shows a flowchart for the entire navigation routine including route searching and route guidance. First, the user inputs, for example, an address for a destination to the main control unit 11 (the route determination unit 33) and sets the destination (Step S111). The route determination unit 33 searches for the destination in the map information stored in the information storage unit 7 and determines a route from the starting point to the destination based on the map information and road information (Step S115). For example, in the present embodiment, the route determination unit 33 determines a plurality of guidance routes and calculates required travel times to the destination for each guidance route based on traffic information for each link of the guidance routes. The route determination unit 33 then selects the one guidance route which has the shortest travel time from among the guidance routes and that one selected route becomes guidance route R1. Note that, in the present embodiment, the selected guidance route R1 includes an expressway. The guidance route R1 is displayed in the guidance screen M5 of the display unit 13 as shown in Fig. 14.

When route guidance starts (Step S120), steps S125 to S145 in Fig. 17 (hereinafter referred to as the congestion information display routine) are executed. First, the road traffic information communication system receiver 17 receives traffic information (congestion information) for a plurality of links in sections from the road traffic information communication system and stores that received information in the congestion information storage unit 27 (Step S125). Next, the congestion information storage unit 27 is searched and it is determined if there is any section having a degree of congestion classified as "Congested" or "Crowded" located in the direction of travel ahead of the current position (Step S130). If the main control unit 11 determines that there is no section with a degree of congestion classified as "Congested" or "Crowded" (Step S130=NO), the congestion information display routine is terminated and route guidance is continued without display of the congestion information (Step S120). Conversely, if the main control unit 11 determines that there is a section with a degree of congestion classified as "Congested" or "Crowded", (Step S130=YES), the main control unit 11 renders the congestion display icon 46 in the congestion information display picture D3 selectable (Step S135).

When the user presses the congestion display icon 46 (Step S140), the display sections in the direction of travel ahead of the current position, the target congestion information, the facility names 39 for the facilities in the display sections, the facility type names 40, and the distances 41 from the current position to the each facility are displayed on the guidance screen M5 (Step S145).

The main control unit 11 repeats the congestion information display routine (Steps S125 to S145) until the user arrives at the destination, in accordance with the user's instructions. When the user finally arrives at the destination, the route guidance is terminated (Step S120).

The third embodiment offers the following advantages:
1) During traveling along a road such as an expressway, the congestion display processing unit 37 searches for a section whose degree of congestion is classified as "Congested" or "Crowded" from among those sections in the direction of travel ahead of the current position. Then among those sections classified as "Congested" or "Crowded", the two sections nearest the current position (the display sections), the congestion information for the display sections (the display target congestion information), the facility names 39 for the facilities in the display sections, the facility type names 40, and the distances 41 are displayed on the guidance screen M5. As the result, only those sections classified as "Congested" or "Crowded" are displayed on the guidance screen M5. Thus, only congestion information necessary for the user is displayed and in a simple and easy-to-understand manner.

2) The user need check only those sections which are classified as "Congested" or "Crowded" by a simple operation such as pushing (selecting) the congestion display icon 46.

3) The user is not required to perform troublesome tasks such as scrolling the screen because all the information necessary for the user is displayed on one screen.

4) The distances 41 from the current position to each facility are displayed, so that the user may easily determine the distances from the current position to the sections classified as "Congested" or "Crowded". Thus, for example, the user may easily know the distance from the current position to a congested area based on the distances 41.

5) The congestion information necessary for the user is displayed along with (e.g. alongside of) the guidance picture GP1, so that the route guidance is not interrupted. Thus, even during guidance along a route, it is possible to display only that congestion information necessary for the user in a simple and easy-to-understand manner.

### Fourth embodiment

In the fourth embodiment shown in Figs. 16 to 19, the navigation apparatus also includes the congestion display unit 37 described in connection with the third embodiment for displaying congestion information between facilities on general roads. Accordingly, the same reference numerals are applied for identical features and a detailed description thereof will not be repeated.

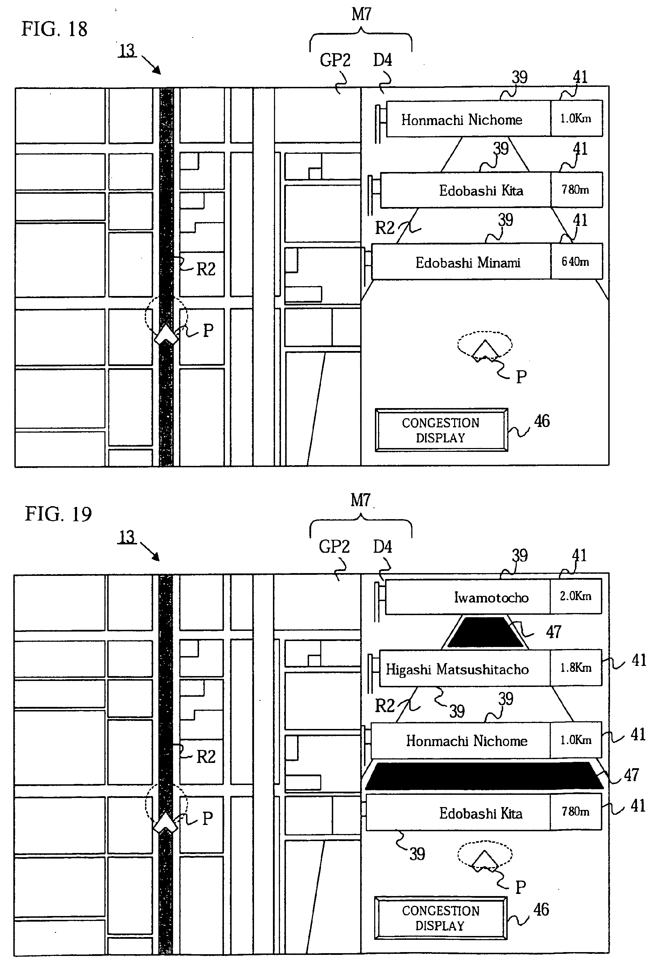

According to the fourth embodiment, as shown in Fig. 18, it is assumed that the user is traveling along a guidance route R2 including only general roads searched by the route determination unit 33 and displayed on the guidance screen GP2. Further, the facility information stored in the facility information storage unit 23 may include, for example, facility names, position data, and icons for facilities such as intersections, bridges, tunnels, public facilities along the general roads, and/or stadiums. Such information is correlated with the roads and the outbound/inbound lanes. The congestion information stored in the congestion information storage unit 27 includes degrees of congestion for links between the facilities (referred to as "sections"). Such congestion information is correlated with roads, outbound/inbound lanes, and sections.

As in the third embodiment, in the fourth embodiment the guidance screen M7 in Fig. 18 simultaneously shows two types of pictures, that is, the guidance display GP2 for route guidance and the congestion information display D4 for displaying congestion information. On the left side of the guidance screen M7, the guidance information GP2 is displayed as a map, with the current position and the guidance route R2 indicated thereon. On the right side of the guidance screen M7, the congestion information display D4 is displayed before initiation of the congestion information routine. In the congestion information display D4, the facility names (intersection names) 39 and the distances 41 from the current position to the facilities (intersections) are displayed. Further in the congestion information display D4, the indicator P indicating the current position, the guidance route R2, and the two sections nearest and contiguous with the current position, selected from among all sections in the direction of travel ahead of the current position, are displayed before initiating execution of the congestion information display routine as shown in Fig. 18. For the contiguous two sections, three facility names (intersection names) 39 are displayed. In this case, the three facility names are "Edobashi Minami", "Edobashi Kita", and "Honmachi nichome" as shown in Fig. 18. In addition, the distances 41 from the current position to each facility are displayed.

As in the third embodiment, the congestion display processing unit 37 searches for a section having a degree of congestion classified as "Congested" or "Crowded" among those sections in the direction of travel ahead of the current position, each time the road traffic information communication system receiver 17 receives traffic information and stores congestion information abstracted from the traffic information in the congestion information storage unit 27. Among the searched sections classified as "Congested" or "crowded", the two sections nearest the current position are displayed sections. In addition, congestion information for the displayed sections is displayed as target congestion information. Only for those sections classified as "Congested" or "Crowded" and located in the direction of travel ahead of the current position, is a selectable congestion icon 46 displayed in the congestion information display D4. If the user pushes the congestion display icon 46, the congestion display processing unit 37 executes the congestion information display routine.

Fig. 19 shows the congestion information display D4 after execution of the congestion information display routine. In this case, the displayed target congestion areas in the direction of travel ahead of the current position, the display sections for the displayed target congestion areas, and facilities in the displayed sections are displayed on the guidance screen M7. For example, the degree of congestion of the displayed section between Edobashikita intersection and Honmachinichome intersection is "congested", so that a red congestion degree indicator 47 is displayed. The degree of congestion of the displayed section between Higashimatsushitacho intersection and lwamotocho intersection is "crowded", so that an orange congestion degree indicator 47 is displayed.

As shown in Fig. 19, the section between Edobashiminami intersection and Edobashikita intersection is not displayed, although it is near the current position, because it is classified as "not congested". Likewise, the section between Honmachinichome intersection and Higashimatsushitacho intersection is not displayed because it is classified as "Not congested". Facility information (the facility names 39) and target congestion information (the congestion degree indicators 47) are displayed only for the facilities in the sections "Congested" or "Crowded", that is, Edobashikita intersection, Honmachinichome intersection, Higashimatsushitacho intersection, and lwamotocho intersection.

The distances from the current position to the various facilities are also displayed. For example, 780m to Edobashikita intersection, 1 km to Honmachinichome intersection, 1.8km to Higashimatsushitacho, and 2km to lwamotocho intersection are displayed. Therefore, the user may easily determine the distances from the current position to each displayed target congestion area. For example, the user may command another search for a guidance route to avoid a congested area located ahead on the guidance route R2.

Next, the operation of the navigation apparatus 1 in the fourth embodiment will be described. As in the other embodiments, it is assumed that the navigation apparatus 1 has set a destination and has searched for a route in advance (Step S111 and S115 in Fig. 16). For example, the route determination unit 33 searches for a plurality of guidance routes, calculates the required times for travel to the destination along the guidance routes, based on traffic information for each link of the guidance routes, and selects the one guidance route which has the shortest travel time from among the plurality of routes and designates that selected one route as the guidance route R2. In the present embodiment, the selected guidance route R2 includes only general roads and is displayed as the guidance display GP2, on the display unit 13, as shown in Fig. 18. The route guidance is then started (Step S120 in Fig. 16) and the congestion information display routine is executed (Steps S125 to S145 in Fig. 17).

The road traffic information communication system receiver 17 receives traffic information (congestion information) for a plurality of links in sections from the road traffic information communication system at any given time and stores the information in the congestion information storage unit 27 (Step S125). Next, the congestion information storage unit 27 is searched and it is determined whether there is any section having a degree of congestion classified as "Congested" or "Crowded" and located in the direction of travel ahead of the current position (Step S130). If the main control unit 11 determines that there is no section classified as "Congested" or "Crowded" (Step S130=NO), the congestion information display processing is terminated and the route guidance is continued without displaying congestion information (Step S120). On the other hand, if the main control unit 11 determines that there is a section classified as "Congested" or "Crowded" (Step S130=YES), the main control unit 11 displays a selectable congestion display icon 46 in the congestion information display D4 on the guidance screen M7 (Step S135).

When the user pushes the congestion display icon 46 (Step S140), the guidance screen M7 is displayed on the display unit 13 to display the target congestion areas located in the direction of travel ahead of the current position, the facility names 39 for facilities in the displayed sections, and the distances 41 from the current position to the facilities (Step S145).

The main control unit 11 repeats execution of the congestion information display routine (Steps S125 to S145) until the user arrives at the destination, in accordance with the user's instructions. When the user finally arrives at the destination, the route guidance is terminated (Step S120).

The fourth embodiment offers the following advantages:
1) During travel along general roads, two display sections, which are the two sections nearest the current position and are classified as "Congested "and/or "Crowded", the facility names 39, and the distances 41 for facilities in the displayed sections are displayed on the guidance screen M7. As a result, only those displayed sections classified as "Congested" and/or "Crowded" are displayed on the guidance screen M7. Thus, only that congestion information necessary for the user is displayed in a simple and easy-to-understand manner.

2) The user need check only those sections classified as "Congested" and/or "Crowded" by a simple operation such as pushing the congestion display icon 46.

3) The user need not execute any troublesome operations such as scrolling the screen because all the information necessary for the user is displayed on one screen.

4) The distances 41 from the current position to each facility are displayed in the congestion information display picture D4, so that the user may easily determine the distances from the current position to each displayed target congestion area. Thus, for example, the user may easily determine the distance from the current position to a congested area from the distances 41. Further, the user may request a new search for guidance route to avoid a congested area ahead on the guidance route R2.

5) The congestion information necessary for the user is displayed simultaneously with (e.g. alongside) the guidance picture GP2, so that the route guidance is not interrupted. Thus, even during route guidance, it is possible to display only that congestion information necessary for the user in a simple and easy-to-understand manner.

Each of the embodiments described above may be modified as follows. In the third embodiment, the route determination unit 33 searches for a guidance route R1 including expressways. The congestion display processing unit 37 searches for a section having a degree of congestion classified as "Congested" or "Crowded," among sections on the guidance route R1. However, during travel along an expressway, sections which are in the direction of travel ahead of the current position and which have a degree of congestion classified as "Congested" or "Crowded" may be searched even if the guidance route R1 has not been searched. In this case, because the destination has not been set, the search range for sections classified as "Congested" or "Crowded" is from the current position to the end of the expressway currently traveled.

In the fourth embodiment, the detect processing unit 33 searches for the guidance route R2 including general roads and further searches for sections which are in the direction of travel ahead of the current position and which have a degree of congestion classified as "Congested" or "Crowded among the sections of the guidance route R2. However, during traveling along the general roads, sections which are in the direction of travel ahead of the current position and classified as "Congested" or "Crowded" may be searched even if the guidance route R2 has not been searched. In this case, the search range for the sections classified as "Congested" or "Crowded" is from the current position to the end of the traveled general road.

In the fourth embodiment, the facility names 39 are displayed on the guidance screen M7. However, the facility type names may also be displayed along with the facility names 39. In the fourth embodiment, an area between facilities on general roads is a section. The congestion display processing unit 37 searches to identify any section classified as "Congested" or "Crowded" in the direction of travel from the current position. However, the section may be defined in another way. For example, an area, which is up to 100m in width from both sides of the general road and includes the road itself, may be set as a section. Such a section corresponds to a "surrounding area" as this term is used herein. Thus, congestion information, not only for the guidance route R2, but also for the surrounding area of guidance route R2 may be displayed as well. In the case of general roads, the congestion of the area surrounding (in the vicinity of) the guidance route R2 may affect the congestion on the guidance route R2 itself. Thus, when there is congestion both on the guidance route R2 and in the surrounding area, the user may request a new search for a guidance route and avoid congestion in the area surrounding the guidance route R2.

In the third and fourth embodiments, the congestion information storage unit 27 stores congestion information correlated with section and of travel direction (outbound/inbound). The congestion information is abstracted from traffic information for each link of the traveled road covering a predetermined area, which the road traffic information communication system receiver 17 receives from the road traffic information communication system at any given time, and may include, for example, degree of congestion, length of congestion, and travel times for a plurality of links between facilities (section). However, the degree of congestion, the length of congestion, and the travel times for a plurality of links may be stored in an as-abstracted condition. In this case, all degrees of congestion for all links in sections in the direction of travel ahead of the current position may be searched by section. If there is any link whose degree of congestion is "Congested" or "Crowded", the section including such a link may be treated as a congested or crowded section.

In the third and fourth embodiments, a section which is in the direction of travel ahead of the current position and whose degree of congestion is "Congested" or "Crowded" is searched. However, only those sections classified as "Congested" may be searched. In each embodiment, the two sections nearest the current position are displayed as output sections on the guidance screens M5 and M7, selected from among sections classified as "Congested" or "Crowded". In this case, scroll bars may be disposed on the guidance screens M5 and M7, to enable scrolling of the guidance screens M5/M7 by holding down a scroll bar. For example, when the guidance screens M5/M7 are scrolled in the traveling direction, further sections on the road ahead which are classified as "Congested" or "Crowded" and target congestion information may be displayed on the guidance screens M5/M7. Thus, the user may check sections classified as "Congested" or "Crowded" other than the two sections nearest the current position.

In the third and fourth embodiments, congestion information is stored in the congestion information storage unit 27 correlated by section and by travel direction (outbound/inbound). The congestion information is abstracted from traffic information for each link on a road in a predetermined area, which traffic information the road traffic information communication system receiver 17 receives from the road traffic information communication system at any given time, and may include, for example, degree of congestion, length of congestion, and travel times for a plurality of links between facilities (section). However, the history of congestion information may be statistically processed by day of week and by period of time and be stored in advance in the congestion information storage unit 27 along with the congestion information received from the road traffic information communication system. Thus, even if the road traffic information communication system receiver 17 can not receive traffic information from the road traffic information communication system, it is still possible to display only information necessary for the user in a simple and easy-to-understand manner by using the statistical congestion information.

In the third and fourth embodiments, sections in the direction of travel ahead of the current position and classified as "Congested" or "Crowded" are identified and displayed. Instead of the degree of congestion, time required to travel the section, calculated based on a travel time in the congestion information, may be displayed. For example, for any one section, when the required travel time is a predetermined amount of time longer than the travel time at the legal speed, such a section may be identified and displayed. This corresponds to a "section whose traffic volume is greater than a predetermined value" used herein.

In the third and fourth embodiments, when the user pushes the congestion display icon 46, the target congestion information, the facility names 39 for facilities in the display sections of the display target congestion information, and the distances 41 from the current position to the facilities are displayed. However, when a section whose degree of congestion is "Congested" or "Crowded" is among the sections in the direction of travel ahead of the current position, the target congestion information, the facility names 39 for the facilities in the display sections of the target congestion information, and the distances 41 from the current position to the facilities may be displayed without the user pressing the congestion display icon 46.

In the third and fourth embodiments, the congestion display icon 46 is always displayed on the congestion information display picture D3 (D4) and the icon 46 becomes selectable only when there is at least one section having a degree of congestion classified as "Congested" or "Crowded" among those sections in the direction of travel ahead of the current position. However, the congestion display icon 46 may be displayed on the congestion information display picture D3 (D4) (and be selectable) only when there is at least one section whose degree of congestion is classified as "Congested" or "Crowded" and is located in the direction of travel ahead of the current position. In other words, optionally, the icon 46 is not displayed on the congestion information display picture D3 (D4) when there is no section classified as "Congested" or "Crowded" among those sections in the direction of travel ahead of the current position.

In the third and fourth embodiments also, the navigation apparatus 1 may be used in conjunction with a navigation system. In this case, as shown in Figs. 12, the navigation apparatus 1 disposed in a vehicle CA has two-way communication with the information center NC via the network M, such as a mobile telephone network. Thus, the navigation system A is composed of the navigation apparatus 1 and the information center NC. The navigation apparatus 1 of the navigation system A is registered as a user in the information center NC and the navigation apparatus 1 is managed by the applied user ID. In this case, the congestion information storage unit 27 corresponding to the user ID is disposed, not in the navigation apparatus 1, but in the information center NC. During execution of the congestion information display routine, the navigation apparatus 1 transfers the user ID and guidance routes to the information center NC via the network M. The information center NC then, in return, sends the congestion information for the guidance routes back to the navigation apparatus 1. In this manner, the navigation apparatus 1 need not include the congestion information storage unit 27 so that the navigation apparatus 1 may be made more compact. Further, the congestion display processing unit 37 may be disposed, not in the navigation apparatus 1, but in the information center NC, along with the congestion information storage unit 27 corresponding to the user ID. When the navigation apparatus 1 transfers the user ID and guidance routes to the information center NC via the network M, the information center NC transfers display sections on the guidance routes and the display target congestion information back to the navigation apparatus 1. Then the navigation apparatus 1 displays the display sections and the display target congestion information on the display unit 13.

Accordingly, in this modification, the navigation apparatus 1 does not need to execute the congestion information display routine, thus reducing the processing load on the navigation apparatus 1. Thus, it is possible to display only that congestion information needed by the user in a simple and easy-to-understand manner utilizing a simple and small navigation apparatus.

In the third and fourth embodiments, congestion information is abstracted from traffic information, which is received by the road traffic information communication system receiver 17 from the road traffic information communication system at any given time, for each link of roads within a predetermined area. However, alternatively or additionally, the congestion information may be abstracted from traffic information received from the information center.

In the third and fourth embodiments, the distances 41 from the current position to facilities are displayed on the congestion information display screen D3. However, instead of the distances, predicted travel times from the current position to the facilities or predicted times of arrival at the facilities may be displayed. Thus, the user may easily learn the times required for travel from the current position to sections classified as "Congested" or "Crowded". Note that the predicted travel times and the predicted times of arrival may be calculated by well known calculation methods, using the traffic information received from the road traffic information communication system or traffic information received from the information center.

In the third and fourth embodiments, the navigation apparatus 1 searches for a plurality of guidance routes and calculates times for travel required to the destination for each guidance route based on traffic information for each link of the guidance route.
The navigation apparatus 1 then selects the one guidance route with the shortest required travel time from among the guidance routes. However, alternatively, the navigation apparatus 1 may search for only one suitable guidance route. That is, the navigation apparatus 1 may calculate guidance route costs (evaluations for the guidance routes) from the starting point (the current position) to each node based on the link traffic information and/or link connection information such as traffic restrictions. When all the costs to the destination are calculated, the navigation apparatus 1 may then determine a single, suitable guidance route which is made by connecting links having the smallest costs.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus for outputting a display of facility information for facilities which are along roads and which include additional facilities, simultaneously with a display of the roads, comprising:
facility information storage means for storing facility information for the facilities;
additional facility information storage means for storing additional facility information for the additional facilities in or near the facilities;
potential additional facility output means for outputting selectable additional facilities stored in the additional facility information storage means, as potential additional facilities, on an additional facility selection screen;
selection means for selecting at least one of the potential additional facilities on the additional facility select screen; and
output means for outputting a facility display including facility information for target facilities, wherein the target facilities are a predetermined number of facilities nearest the current position selected from among the potential additional facilities selected by the select means, and for outputting a road display.

2. A navigation apparatus for outputting a display of facility information for facilities which are along roads and which include additional facilities, simultaneously with a display of the roads, comprising:
facility information storage means for storing facility information for the facilities;
additional facility information storage means for storing additional facility information for the additional facilities in or near the facilities;
potential additional facility output means for searching, responsive to input of a search signal commanding a search for facilities including arbitrary additional facilities, to locate additional facilities in facilities in the direction of travel ahead of the current position along the roads, within the additional facility information storage means, and for outputting the located additional facilities as selectable potential additional facilities on an additional facility selection screen;
selection means for selecting at least one of the potential additional facilities on the additional facility selection screen; and
output means for outputting a facility display showing facility information for target facilities, wherein the target facilities are a predetermined number of facilities located nearest the current position and including the potential additional facilities selected by the selection means, along with the road display.

3. A navigation apparatus for outputting a display of facility information for facilities along roads, along with a road display, comprising:
current position determination means for determining the current position of a vehicle equipped with the navigation apparatus;
facility information storage means for storing facility information for the facilities;
potential facility output means for outputting selectable facilities stored in the facility information storage means as potential facilities on a facility selection screen;
selection means for selecting at least one of the potential additional facilities on the facility selection screen; and
output means for outputting a facility display showing facility information for a predetermined number of facilities nearest the current position among all facilities in the direction of travel ahead of the current position, and outputting a facility display, responsive to selection of potential facilities and the setting of a predetermined number of facilities nearest the current position among the selected potential facilities, as target facilities, wherein the facility display shows the facility information for the target facilities, and for outputting a road display.

4. A navigation apparatus for outputting a display of facility information for facilities along roads, as well as a display of the roads to the output unit, comprising:
current position determination means for determining the current position of a vehicle equipped with the navigation apparatus;
facility information storage means for storing facility information for the facilities;
potential facility output means for searching, responsive to input of a search signal requesting a search for arbitrary facilities, to locate facilities in the direction of travel ahead of the current position along the roads in the facility information stored in the facility information storage means and for outputting the located facilities as selectable potential facilities on the facility selection screen;
selection means for selecting at least one of the potential facilities on the facility selection screen; and
output means for outputting the display of facility information for the selected potential facilities as target facilities, wherein the target facilities are a predetermined number of facilities nearest the current position among facilities selected by the selection means, and for outputting the display of roads.

5. The navigation apparatus of one of claims 1 or 2, wherein the output means outputs the additional facility information for the potential additional facilities selected by the select means and the facility information for the target facilities.

6. The navigation apparatus of claim 2, further comprising: route search means for searching for a guidance route from a current position to a destination, wherein the potential additional facility output means searches, responsive to input of a search signal requesting a search to locate facilities which include arbitrary additional facilities, to locate additional facilities in the facilities along roads included in the guidance route stored within the additional facility information storage means and for outputting the located additional facilities as selectable potential additional facilities on the additional facility selection screen.

7. The navigation apparatus of claim 4, further comprising: route search means for searching for a guidance route from a current position to a destination, wherein the potential additional facility output means searches, responsive to input of a search signal requesting a search to locate facilities which include arbitrary additional facilities, to locate additional facilities in the facilities along roads included in the guidance route stored within the additional facility information storage means and for outputting the located additional facilities as selectable potential additional facilities on the additional facility selection screen.

8. A navigation apparatus for outputting a display of additional facility information for additional facilities neighboring facilities located along roads as well as a display of the roads, comprising:
current position determination means for determining the current position of a vehicle equipped with the navigation apparatus;
facility information storage means for storing facility information for the facilities on the roads;
additional facility information storage means for storing additional facility information for the additional facilities in a section between the facilities;
potential additional facility output means for selecting, responsive to input of a search signal requesting a search for arbitrary additional facilities, to locate at least one additional facility in the sections located in the direction of travel ahead of the current position along the roads and stored within the additional facility information storage means, and outputting the located additional facilities as selectable potential additional facilities on the additional facility selection screen;
selection means for selecting at least one of the potential additional facilities on the additional facility select screen; and
output means for outputting an additional facility output screen with display of facility information for facilities in output sections and target additional facilities, wherein the output sections are a predetermined number of sections nearest the current position among the sections with the potential additional facilities selected by the selection means, and wherein the target additional facilities are additional facilities located in the output sections, and for outputting the road display.

9. The navigation apparatus of claim 8, further comprising: route search means for searching for a guidance route from a current position to a destination, wherein the potential additional facility output means searches, within the additional facility information storage means, responsive to input of a search signal requesting a search for arbitrary additional facilities, to locate additional facilities in sections in the direction of travel ahead of the current position along a road included in the guidance route, and for outputting the located additional facilities as potential additional facilities on the additional facility select screen.

10. The navigation apparatus of one of claims 8 or 9, wherein the section includes an area surrounding the roads between facilities, and the additional facility information storage means stores additional facility information for additional facilities in the section.
